# EUROPEAN PATENT APPLICATION

(11) **EP 4 614 906 A1**
(43) Date of publication of application: **10.09.2025**
(21) Application number: 22964126.1
(22) Date of filing: 04.11.2022
(51) Int. Cl.: H04L 27/00, H04W 64/00

(54) **POSITION VERIFICATION METHOD AND APPARATUS FOR TERMINAL DEVICE**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/130133
(87) International publication number: WO 2024/092825

(57) **Abstract**

The present disclosure relates to the technical filed of mobile communication. Provided are a position verification method and apparatus for a terminal device. The method comprises: a terminal device reporting global navigation satellite system (GNSS) position information to a network device; receiving configuration information; performing measurement on a neighboring cell of a serving cell on the basis of the configuration information; sending a measurement result to the network device; the network device receives the GNSS position information, which is reported by the terminal device; and receiving the measurement results, which is sent by the terminal device, and on the basis of the measurement result, verifying the reliability of the GNSS position information, which is reported by the terminal device. The position verification method and apparatus for a terminal device in the present disclosure can effectively improve the accuracy of position verification, thereby preventing the problem of it not being possible for a terminal to access a system due to position verification failure.

## Description

### TECHNICAL FIELD

The disclosure relates to the field of wireless communication technologies, particularly to a terminal position verification method and a terminal position verification apparatus.

### BACKGROUND

In the scenarios of satellite communication, the long signal transmission distance between the transmitter and the receiver results in a significant time delay for data transmission. For the transmission with an uplink-downlink relationship, a time delay parameter is currently introduced to compensate for the transmission time delay. In order to determine the time delay parameter, the terminal is required to report position information. When reporting the position information, the terminal can obtain its own position information based on its own global navigation satellite system (GNSS) measurement and report the position information to the network side. However, for the network side, the position information obtained by the terminal based on the GNSS is unreliable. In order to ensure the reliability of the position information, the position information of the terminal is obtained currently through the multi-round trip time (multi-RTT) approach. However, the rapid movement of the satellite may lead to a relatively large error on the position information. When the satellite moves along a predetermined direction, there may be a mirrored position information, resulting in a failure of position verification.

### SUMMARY

The embodiments of the disclosure provide a terminal position verification method and a terminal position verification apparatus, which may effectively improve an accuracy of position verification and avoid the problem that the terminal fails to access a system due to a failure of the position verification.

According to a first aspect of embodiments of the disclosure, a terminal position verification method, performed by a terminal, is provided. The method includes:
reporting global navigation satellite system (GNSS) position information to a network device;
receiving configuration information;
measuring a neighboring cell of a serving cell based on the configuration information; and
sending a measurement result to the network device.

In some embodiments of the disclosure, receiving the configuration information includes:
receiving the configuration information sent by the network device, in which the configuration information includes measurement configuration information for the neighboring cell of the serving cell.

In some embodiments of the disclosure, measuring the neighboring cell of the serving cell based on the configuration information includes:
measuring the neighboring cell of the serving cell according to the measurement configuration information, and obtaining a measurement value.

In some embodiments of the disclosure, measuring the neighboring cell of the serving cell according to the measurement configuration information, and obtaining the measurement value includes:
receiving, from the network device, an instruction for measuring the neighboring cell of the serving cell, triggering measuring, according to the measurement configuration information, of the neighboring cell of the serving cell, and obtaining the measurement value.

In some embodiments of the disclosure, measuring the neighboring cell of the serving cell according to the measurement configuration information, and obtaining the measurement value includes:
measuring the neighboring cell of the serving cell according to the measurement configuration information indicated by indication information, and obtaining the measurement value, in which the instruction includes the indication information indicating at least two sets of measurement configuration information for the neighboring cell.

In some embodiments of the disclosure, the measurement configuration information includes at least one of:
a cell identity (ID) of a neighboring cell to be measured of the serving cell;
measurement pilot configuration information to be measured;
information on a time-domain position where performing a measurement is determined; or
a measurement value.

In some embodiments of the disclosure, receiving the configuration information includes:
receiving ephemeris information of the neighboring cell of the serving cell.

In some embodiments of the disclosure, measuring the neighboring cell of the serving cell based on the configuration information included:
determining, according to the ephemeris information, that there is a position verification error in the GNSS position information reported by the terminal, triggering measuring of the neighboring cell of the serving cell, and obtaining a measurement value.

In some embodiments of the disclosure, sending the measurement result to the network device includes:
sending the measurement value to the network device.

In some embodiments of the disclosure, sending the measurement result to the network device includes:
selecting a maximum measurement value from measurement values; and
sending the maximum measurement value and a cell ID corresponding to the maximum measurement value to the network device; or
sending a cell ID corresponding to the maximum measurement value to the network device.

According to a second aspect of embodiments of the disclosure, a terminal position verification method, performed by a network device, is provided. The method includes:
receiving GNSS position information reported by a terminal;
sending configuration information to the terminal;
receiving a measurement result sent by the terminal, in which the measurement result is obtained by the terminal measuring a neighboring cell of a serving cell; and
verifying, based on the measurement result, a reliability of the GNSS position information reported by the terminal.

In some embodiments of the disclosure, in a case where the measurement result is a measurement value, verifying, based on the measurement result, the reliability of the GNSS position information reported by the terminal includes:
determining a first neighboring cell of the serving cell closest to the terminal according to the GNSS position information reported by the terminal and a distance between the network device and a network device of each neighboring cell of the serving cell;
comparing a measurement value corresponding to the first neighboring cell of the serving cell with measurement values of other neighboring cells of the serving cell;
in a case where the measurement value corresponding to the first neighboring cell of the serving cell is greater than the measurement values of other neighboring cells of the serving cell, determining that the GNSS position information reported by the terminal is reliable.

In some embodiments of the disclosure, the method further includes:
sending the configuration information to the terminal, in which the configuration information comprises measurement configuration information for the neighboring cell of the serving cell.

In some embodiments of the disclosure, the method further includes:
sending an instruction to the terminal, wherein the instruction is configured to trigger the terminal to measure the neighboring cell of the serving cell.

In some embodiments of the disclosure, the instruction carries indication information indicating at least two sets of measurement configuration information for the neighboring cell of the serving cell.

In some embodiments of the disclosure, the measurement configuration information includes at least one of:
a cell ID of a neighboring cell to be measured of the serving cell;
measurement pilot configuration information to be measured;
information on a time-domain position where performing a measurement is determined; or
the measurement value.

In some embodiments of the disclosure, the measurement result comprises a cell ID corresponding to a maximum measurement value, and verifying, based on the measurement result, the reliability of the GNSS position information reported by the terminal includes:
determining a first neighboring cell of the serving cell closest to the terminal according to the GNSS position information reported by the terminal and a distance between the network device and a network device of each neighboring cell of the serving cell;
determining whether the cell ID corresponding to the maximum measurement value is consistent with a cell ID of the first neighboring cell of the serving cell; and
in a case where the cell ID corresponding to the maximum measurement value is consistent with the cell ID of the first neighboring cell of the serving cell, determining that the GNSS position information reported by the terminal is reliable.

According to a third aspect of embodiments of the disclosure, a terminal position verification apparatus, configured in a terminal, is provided. The apparatus includes:
a sending module, configured to report global navigation satellite system (GNSS) position information to a network device;
a receiving module, configured to receive configuration information; and
a processing module, configured to measure, based on the configuration information, a neighboring cell of a serving cell and obtain a measurement result;
in which the sending module is further configured to send the measurement result to the network device.

According to a fourth aspect of embodiments of the disclosure, a terminal position verification apparatus, configured in a network device, is provided. The apparatus includes:
a receiving module, configured to receive GNSS position information reported by a terminal and receive a measurement result sent by the terminal, wherein the measurement result is obtained by the terminal measuring a neighboring cell of a serving cell;
a sending module, configured to send configuration information to the terminal; and
a processing module, configured to verify, based on the measurement result, a reliability of the GNSS position information reported by the terminal.

According to a fifth aspect of embodiments of the disclosure, a communication device is provided. The communication device includes: a transceiver, a memory and a processor which is connected to the transceiver and the memory respectively, wherein the processor is configured to, by executing computer-executable instructions stored in the memory, control wireless signal transmission and reception of the transceiver, and enable the method of the first aspect or the method of the second aspect to be implemented.

According to an sixth aspect of embodiments of the disclosure, a computer readable storage medium is provided, in which the computer readable storage medium is configured for storing instructions, and when the instructions are executed by a processor, the method of the first aspect or the method of the second aspect is implemented.

According to a seventh aspect of embodiments of the disclosure, a communication system is provided, which includes a terminal configured to implement the method of the first aspect or a network device configured to implement the method of the second aspect.

The embodiments of the disclosure provide the terminal position verification method and the terminal position verification apparatus. The terminal reports the GNSS position information to the network device, receives the configuration information, measures the neighboring cell of the serving cell based on the configuration information, and reports the measurement results to the network device. The network device receives the GNSS position information and the measurement result, and verifies the reliability of the GNSS position information reported by the terminal. In this way, the reliability of the position information reported by the terminal may be determined based on the measurement value of the target neighboring cell of the serving cell, eliminating interference from mirrored position information caused by satellite movement, improving the accuracy of the position verification and avoiding the problem that the terminal fails to access the system due to the failure of the position verification.

Additional aspects and advantages of this disclosure will be partially presented in the following description, some of which will become apparent from the following description, or learned through practice of this disclosure.

### BRIEF DESCRIPTION OF THE DRAWINGS

The above and/or additional aspects and advantages of the disclosure will become apparent and readily understandable from the following description of embodiments in conjunction with the accompanying drawings.
FIG. 1 is a schematic flowchart of a terminal position verification method on a terminal side according to an embodiment of the disclosure.
FIG. 2 is a schematic flowchart of a terminal position verification method on a network device side according to an embodiment of the disclosure.
FIG. 3 is a schematic flowchart of a terminal position verification method according to an embodiment of the disclosure.
FIG. 4 is a schematic diagram of a terminal position verification method according to an embodiment of the disclosure.
FIG. 5 is a schematic flowchart of a terminal position verification method according to an embodiment of the disclosure.
FIG. 6 is a schematic flowchart of a terminal position verification method according to an embodiment of the disclosure.
FIG. 7 is a block diagram of a terminal position verification apparatus on a terminal side according to an embodiment of the disclosure.
FIG. 8 is a block diagram of a terminal position verification apparatus on a network device side according to an embodiment of the disclosure.
FIG. 9 is a block diagram of a communication system according to an embodiment of the disclosure.
FIG. 10 is a schematic diagram of a communication apparatus according to an embodiment of the disclosure.
FIG. 11 is a schematic diagram of a chip according to an embodiment of the disclosure.

### DETAILED DESCRIPTION

Embodiments of the disclosure will be described in detail below. Examples of the embodiments are shown in the accompanying drawings, in which the same or similar reference numerals represent the same or similar elements or elements with the same or similar functions throughout. The embodiments described below with reference to the accompanying drawings are exemplary and are intended to explain the disclosure, rather than being construed as limitations to the disclosure.

In researches of wireless communication technology, satellite communication is regarded as an important aspect of the future development of wireless communication technology. The satellite communication refers to communication realized by radio communication devices on the ground using a satellites as a relay. A satellite communication system includes a satellite segment and a ground segment. Characteristics of the satellite communication includes: a large communication range; communication being realized between any two points within a coverage area of radio waves transmitted by the satellite; being less susceptible to terrestrial disasters (a high reliability). As a supplement to the current terrestrial cellular communication system, the satellite communication may bring the following benefits.

Extended coverage: for areas that are out of reach of the current cellular communication system or where a coverage cost is high, such as oceans, deserts, and remote mountainous regions, the satellite communication may be employed to address communication issues.

Emergency communication: in extreme situations such as disasters like earthquakes, when infrastructures of the cellular communication becomes unavailable, the satellite communication may be employed to quickly establish a communication connection.

Enabling industry applications: for example, for latency-sensitive services involving long-distance transmission, the satellite communication may be employed to reduce the latency of service transmission.

It is foreseeable that in future wireless communication systems, the satellite communication system and the terrestrial cellular communication systems will gradually achieve in-depth integration, truly realizing an intelligent interconnection of all things.

In the scenarios of satellite communication, the long signal transmission distance between the transmitter and the receiver results in a significant time delay for data transmission. For the transmission with an uplink-downlink relationship, a time delay parameter is currently introduced to compensate for the transmission time delay. In order to determine the time delay parameter, the terminal is required to report position information. When reporting the position information, the terminal can obtain its own position information based on its own global navigation satellite system (GNSS) measurement and report the position information to the network side. However, for the network side, the position information obtained by the terminal based on the GNSS is unreliable. In order to ensure the reliability of the position information, the position information of the terminal is obtained currently through the multi-round trip time (multi-RTT) approach. However, the rapid movement of the satellite may lead to a relatively large error on the position information. When the satellite moves along a predetermined direction, there may be a mirrored position information, resulting in a failure of position verification.

To address this, the embodiments of the disclosure propose a terminal position verification method and a terminal position verification apparatus, which may effectively improve an accuracy of position verification and avoid the problem that the terminal fails to access a system due to a failure of the position verification.

The terminal position verification method and the terminal position verification apparatus provided in the application will be described in detail below with reference to the accompanying drawings.

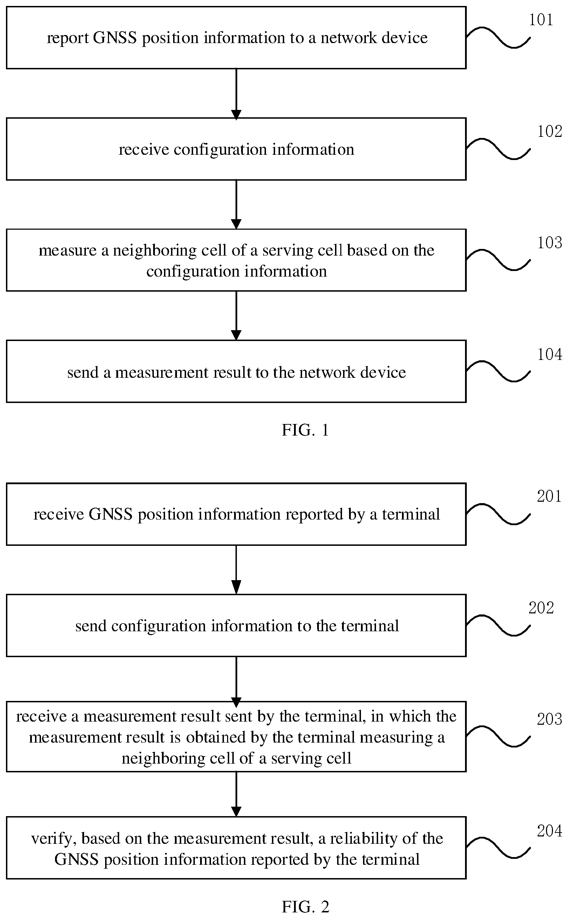

FIG. 1 is a schematic flowchart of a terminal position verification method on a terminal side according to an embodiment of the disclosure. As illustrated in FIG. 1, the method is performed by a terminal and includes the following steps.

At step S101, global navigation satellite system (GNSS) position information is reported to a network device.

According to the embodiments of the disclosure, the terminal may obtain its own GNSS position information based on its own GNSS measurement, and report the GNSS position information to the network device. The method for the GNSS measurement may employ any existing approach, and the embodiments of the disclosure do not impose specific limitations on this. In addition, any existing approach may also be used for the terminal to report the obtained GNSS position information to the network device, and the embodiments of the disclosure do not impose specific limitations on this either.

At step S102, configuration information is received.

After reporting the GNSS position information to the network device, the terminal may receive the configuration information. The configuration information may be measurement configuration information sent by the network device to the terminal, or may be ephemeris information of a neighboring cell. The embodiments of the disclosure do not impose specific limitations on this.

It should be noted that the configuration information may be the measurement configuration information, and may include the measurement configuration information for measuring the neighboring cell of a serving cell. The measurement configuration information may include at least one of:
an identity (ID) of a neighboring cell to be measured of the serving cell, measurement pilot configuration information to be measured, information on a time-domain position where performing a measurement is determined, or a measurement value.

It should be noted that the neighboring cell to be measured of the serving cell is determined by the network device, and the network device sends the ID of the neighboring cell to be measured of the serving cell to the terminal. There is at least one neighboring cell of the serving cell, and there may be a plurality of neighboring cells of the serving cell, with no specific limitations imposed by the embodiments of the disclosure, which may be configured according to actual situations. In the embodiments of the disclosure, the measurement value may be a reference signal receiving power (RSRP), or other relevant content. The embodiments of the disclosure do not impose specific limitations on this.

In addition, when the configuration information received by the terminal is the ephemeris information of the neighboring cell of the serving cell, the ephemeris information records ephemeris information of a servicing serving of the neighboring cell of the serving cell. Based on this relevant content, the terminal may perform relevant measurements on the serving satellites of the neighboring cell of the serving cell, so as to verify the GNSS position information of the terminal. When it is verified that there is an error in the GNSS position information of the terminal, the terminal is triggered to measure the neighboring cell of the serving cell to obtain measurement value.

At step S103, a neighboring cell of a serving cell is measured based on the configuration information.

According to the embodiments of the disclosure, the measurement is performed on the neighboring cell of the serving cell based on the above configuration information to obtain the measurement value. In a case where there are a plurality of neighboring cells of the serving cell to be measured, the plurality of neighboring cells of the serving cell are measured. The embodiments of the disclosure do not impose specific limitations on this. In a case where measurement configuration information for a measurement on a target cell configured by the network device is received, the neighboring cell of the serving cell is measured according to the measurement configuration information. In a case where the terminal receives the ephemeris information of the neighboring cell of the serving cell, the measurement is performed based on measurement configuration information set by the terminal. This measurement configuration information also includes the measurement pilot configuration information to be measured, the information on a time-domain position where performing a measurement is determined, and the measurement value. The embodiments of the disclosure do not impose specific limitations on the method by which the terminal obtains and sets the measurement configuration information.

At step S104, a measurement result is sent to the network device.

In the embodiments of the disclosure, the measurement result sent to the network device may include the measurement value and the cell ID corresponding to the measurement value. The measurement value is determined based on the above measurement, which is not limited in the embodiments of the disclosure.

Based on the above method on the terminal side, an embodiment of the disclosure provides a terminal position verification method, which is performed by a network device. As illustrated in FIG. 2, the method includes the following steps.

At step S201, GNSS position information reported by a terminal is received.

According to the embodiments of the disclosure, the terminal may obtain its own GNSS position information based on its own GNSS measurement, and report the GNSS position information to the network device. The method for the GNSS measurement may employ any existing approach, and the embodiments of the disclosure do not impose specific limitations on this. In addition, any existing approach may also be used for the terminal to report the obtained GNSS position information to the network device, and the embodiments of the disclosure do not impose specific limitations on this either.

According to the embodiments of the disclosure, after receiving the GNSS position information reported by the terminal, the network device determines whether the GNSS position information is reliable based on the GNSS position information and a corresponding position positioning method. In a case where the GNSS position information is not reliable, the terminal will be triggered to measure the neighboring cell of the serving cell, and a measurement result of the neighboring cell of the serving cell will further assist in determining a reliability of the GNSS position information.

At step S202, configuration information is sent to the terminal.

After reporting the GNSS position information to the network device, the terminal may receive the configuration information. The configuration information may be measurement configuration information sent by the network device to the terminal, or may be ephemeris information of the neighboring cell. The embodiments of the disclosure do not impose specific limitations on this.

At step S203, a measurement result sent by the terminal is received, in which the measurement result is obtained by the terminal measuring a neighboring cell of a serving cell.

According to the embodiments of the disclosure, the measurement result sent by the terminal may be a measurement value of a target cell, or a cell ID corresponding to a maximum measurement value selected from the measurement values, or both the cell ID corresponding to the maximum measurement value selected from the measurement values and the maximum measurement value. The embodiments of the disclosure do not impose specific limitations on this, and the corresponding verification method will be executed based on the specific content received. After receiving the measurement result reported by the terminal, the network device will further verify, based on the measurement result, the reliability of the GNSS position information reported by the terminal. Based on the method on the terminal side, this measurement value may be obtained by the measurement performed by the terminal triggered by the network device, or by the terminal after receiving the ephemeris information of the neighboring cell. The embodiments of the disclosure do not impose specific limitations on this. In the embodiments of the disclosure, the measurement value may be an RSRP, or other relevant content. The embodiments of the disclosure do not impose specific limitations on this.

At step S204, a reliability of the GNSS position information reported by the terminal is verified based on the measurement result.

It should be noted that the measurement value of the neighboring cell of the serving cell of the terminal assists in determining the reliability of the GNSS position information reported by one terminal, which is based on a principle that the measurement value obtained by measuring a neighboring cell close to the terminal should be higher than the measurement values of other neighboring cells that are farther away from the terminal. Therefore, the reported measurement value of the neighboring cell of the serving cell may be used to assist in determining the reliability of the GNSS position information.

According to the embodiments of the disclosure, the terminal reports the GNSS position information to the network device, receives the configuration information, measures the neighboring cell of the serving cell based on the configuration information, and reports the measurement results to the network device. The network device receives the GNSS position information and the measurement result, and verifies the reliability of the GNSS position information reported by the terminal. In this way, the reliability of the position information reported by the terminal may be determined based on the measurement value of the target neighboring cell of the serving cell, eliminating interference from mirrored position information caused by satellite movement, improving the accuracy of the position verification and avoiding the problem that the terminal fails to access the system due to the failure of the position verification.

Based on the above method, when reporting the measurement result of the neighboring cell of the serving cell, the terminal may report the measurement values of all the neighboring cells of the serving cell to the network device, and the network device verifies the reliability of the GNSS position information reported by the terminal according to these measurement values. The terminal may also select the maximum measurement value from the measurement values of all the measured neighboring cells of the serving cell, and report the cell ID corresponding to the maximum measurement value, or both the maximum measurement value and the cell ID corresponding to the maximum measurement value to the network device. Then, the network device verifies the reliability of the GNSS position information reported by the terminal according to the cell ID corresponding to the maximum measurement value. The embodiments of the disclosure do not impose limitations on which method to adopt during specific execution. The following will specifically elaborate on different situations respectively.

In some embodiments of the disclosure, the terminal reports the measured measurement value of the target cell to the network device, and the network device verifies the reliability of the GNSS position information reported by the terminal based on the measurement value. When reporting first measurement values of all neighboring cells of the serving cell, the terminal may be triggered by the network device to measure the neighboring cells of the serving cell and report the measurement values. Alternative, the terminal may be triggered, based on the ephemeris information of the neighboring cell of the serving cell, to measure the neighboring cell of the serving cell and report the first measurement values. The embodiments of the disclosure do not impose specific limitations on this.

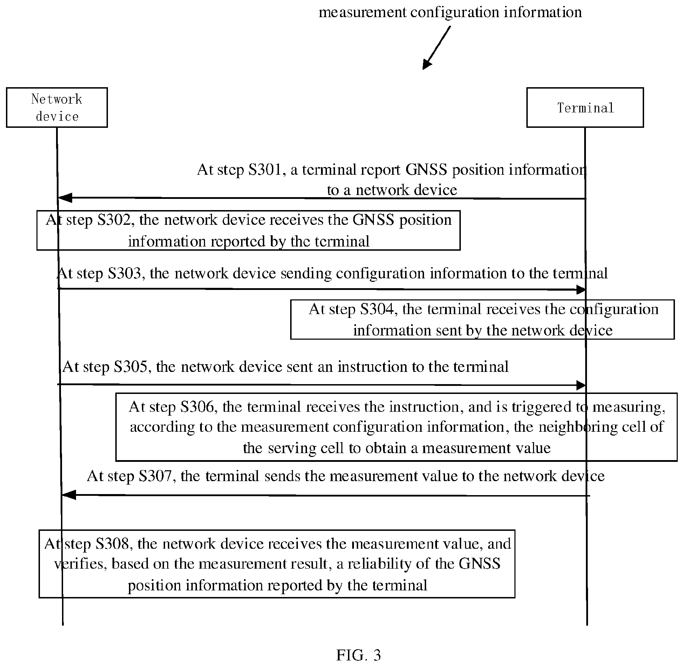

In the embodiments of the disclosure, the case where the terminal is triggered by the network device to measure the neighboring cell of the serving cell and report the measurement value is taken as an example for detailed elaboration. As illustrated in FIG. 3, a terminal position verification method is provided, and the method includes the following steps.

At step S301, a terminal report GNSS position information to a network device.

In the embodiments of the disclosure, the relevant content of the terminal reporting the GNSS position information to the network device may refer to the corresponding content in Step 101 of FIG. 1, which will not be elaborated here again.

At step S302, the network device receives the GNSS position information reported by the terminal.

In the embodiments of the disclosure, the relevant content of the network device receiving the GNSS position information reported by the terminal may refer to the corresponding content in Step 201 of FIG. 2, which will not be elaborated here again.

At step S303, the network device sending configuration information to the terminal, in which the configuration information includes measurement configuration information of a neighboring cell of a serving cell.

It should be noted that the network device obtains measurement configuration information of a neighboring cell to be measured of the serving cell of the terminal, and the measurement configuration information may include at least one of:

an ID of the neighboring cell to be measured of the serving cell, measurement pilot configuration information to be measured, information on a time-domain position where performing a measurement is determined, or a measurement value.

It should be noted that there is at least one neighboring cell of the serving cell, and there may be a plurality of neighboring cells of the serving cell, with no specific limitations imposed by the embodiments of the disclosure, which may be configured according to actual situations. In the embodiments of the disclosure, the measurement value may be an RSRP, or other relevant content. The embodiments of the disclosure do not impose specific limitations on this.

At step S304, the terminal receives the configuration information sent by the network device, in which the configuration information includes the measurement configuration information of the neighboring cell of the serving cell.

At step S305, the network device sent an instruction to the terminal, in which the instruction is configured to trigger the terminal to measure the neighboring cell of the serving cell.

It should be noted in the embodiments of the disclosure that when the network device determines that an error of the GNSS position information reported by the terminal is within a predefined range, the network device sends the instruction to the terminal. The instruction may also be sent under other situations, and the embodiments of the disclosure do not impose specific limitations on this. In addition, it should be noted in the embodiments of the disclosure that when the terminal receives the measurement configuration information of the neighboring cell of the serving cell sent by the network device, the terminal may measure, according to the measurement configuration information, the neighboring cell of the serving cell by itself to obtain the measurement value, or may be triggered measuring the neighboring cell of the serving cell after receiving the instruction.

At step S306, the terminal receives the instruction, and is triggered to measuring, according to the measurement configuration information, the neighboring cell of the serving cell to obtain a measurement value.

Furthermore, when receiving the instruction, in a case where the instruction carries indication information indicating at least two sets of measurement configuration information for the neighboring cell of the serving cell, the terminal measures the neighboring cells of the serving cell according to the measurement configuration information indicated by the indication information, and obtains the measurement values. The specific implementation of the embodiments of the disclosure is not limited herein.

At step S307, the terminal sends the measurement value to the network device.

At step S308, the network device receives the measurement value, and verifies, based on the measurement result, a reliability of the GNSS position information reported by the terminal.

In the embodiments of the disclosure, when verifying, based on the measurement value, the reliability of the GNSS position information reported by the terminal, the following method may be adopted, but is not limited to it. The method includes the following steps.
A. a first neighboring cell of the serving cell that is closest to the terminal is determined the GNSS position information reported by the terminal and a distance between the network device and a network device of each neighboring cell of the serving cell.
   In the embodiments of the disclosure, the network device may be a serving network device that provides services for the terminal. Based on the communication between network devices, the serving network device may obtain the distance between the serving network device and the network device of the neighboring cell of the serving cell. Based on the distance between this serving network device and the network device of the neighboring cell of the serving cell, a network device of the neighboring cell closest to the terminal may be selected as the first neighboring cell of the serving cell.
B. a measurement value corresponding to the first neighboring cell of the serving cell is compared with measurement values of other neighboring cells of the serving cell. In a case where the measurement value corresponding to the first neighboring cell of the serving cell is greater than the measurement values of other neighboring cells of the serving cell, it is determined that the GNSS position information reported by the terminal is reliable.

In the embodiments of the disclosure, the measurement value corresponding to the first neighboring cell of the serving cell is comparing with the measurement values of other neighboring cells of the serving cell. In a case where the measurement value corresponding to the first neighboring cell of the serving cell is greater than the measurement values of other neighboring cells of the serving cell, it indicates that the network device of the first neighboring cell of the serving cell is closest to the terminal, and the position information reported by the terminal is not mirrored position information but reliable position information.

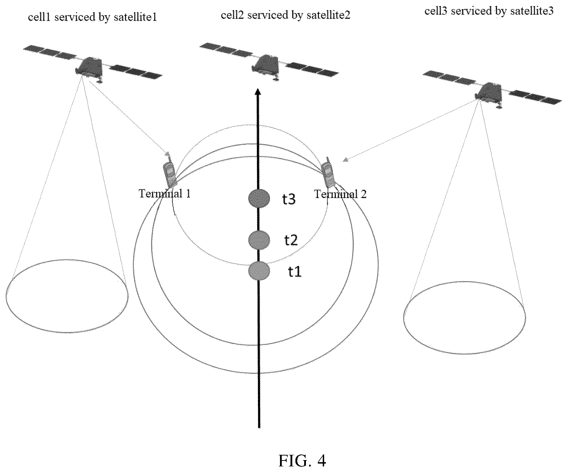

Specifically, as illustrated in FIG. 4, for example, to verify GNSS position information reported by a terminal 1, after reporting the GNSS position information, the terminal 1 measures a neighboring cell1 and a neighboring cell3 of the serving cell and reports measured measurement values. After the network device receives the measurement values of the cell1 and the cell3 and determines that the measurement value (such as RSRP) of the cell1 is higher than that an RSRP of the cell3, the network device determines that the terminal 1 is a reliable terminal, and the reported GNSS position information is reliable.

In the embodiments of the disclosure, the terminal reports the GNSS position information to the network device, receives the measurement configuration information of the neighboring cell of the serving cell, measures the neighboring cell of the serving cell based on the measurement configuration information to obtain the measurement value, and reports the measurement value to the network device. The network device receives the GNSS position information and the measurement value, and verifies the reliability of the GNSS position information reported by the terminal based on the measurement value. In this way, the reliability of the position information reported by the terminal may be determined based on the measurement value of the target neighboring cell of the serving cell, eliminating interference from mirrored position information caused by satellite movement, improving the accuracy of the position verification and avoiding the problem that the terminal fails to access the system due to the failure of the position verification.

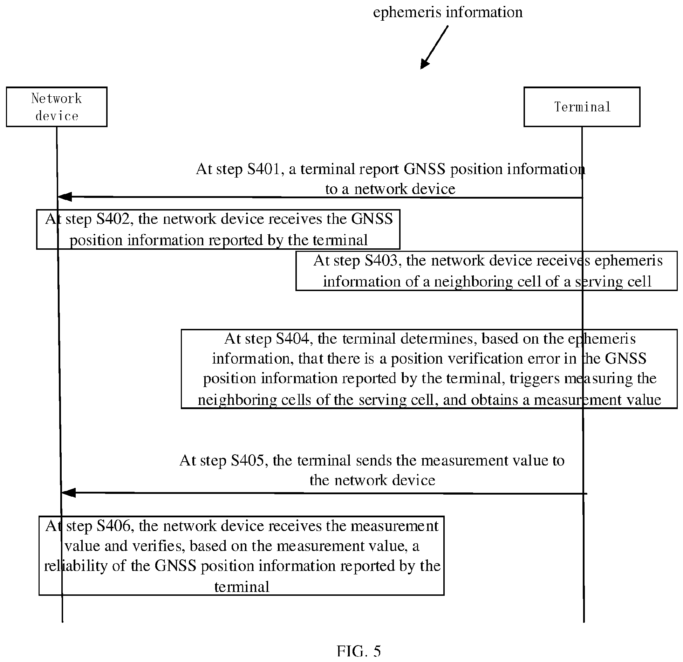

In some embodiments of the disclosure, the terminal is triggered, based on the ephemeris information of the neighboring cell of the serving cell, to measure the neighboring cell of the serving cell and report the measurement value. As illustrated in FIG. 5, a terminal position verification method is provided, and the method includes the following steps.

At step S401, a terminal report GNSS position information to a network device.

In the embodiments of the disclosure, the relevant content of the terminal reporting the GNSS position information to the network device may refer to the corresponding content in Step 101 of FIG. 1, which will not be elaborated here again.

At step S402, the network device receives the GNSS position information reported by the terminal.

In the embodiments of the disclosure, the relevant content of the network device receiving the GNSS position information reported by the terminal may refer to the corresponding content in Step 201 of FIG. 2, which will not be elaborated here again.

At step S403, the network device receives ephemeris information of a neighboring cell of a serving cell.

It should be noted in the embodiments of the disclosure that the terminal may receive the ephemeris information of the neighboring cell of the serving cell issued by the network device.

At step S404, the terminal determines, based on the ephemeris information, that there is a position verification error in the GNSS position information reported by the terminal, triggers measuring of the neighboring cells of the serving cell, and obtains a measurement value.

At step S405, the terminal sends the measurement value to the network device.

At step S406, the network device receives the measurement value and verifies, based on the measurement value, a reliability of the GNSS position information reported by the terminal.

In the embodiments of the disclosure, when verifying, based on the measurement value, the reliability of the GNSS position information reported by the terminal, the following method may be adopted, but is not limited to it. The method includes the following steps.
A. a first neighboring cell of the serving cell that is closest to the terminal is determined according to a distance between the network device and a network device of each neighboring cell of the serving cell, as well as the GNSS position information reported by the terminal.
   In the embodiments of the disclosure, the network device may be a serving network device that provides services for the terminal. Based on the communication between network devices, the serving network device may obtain the distance between the serving network device and the network device of the neighboring cell of the serving cell. Based on the distance between this serving network device and the network device of the neighboring cell of the serving cell, a network device of the neighboring cell closest to the terminal may be selected as the first neighboring cell of the serving cell.
B. a measurement value corresponding to the first neighboring cell of the serving cell is compared with measurement values of other neighboring cells of the serving cell. In a case where the measurement value corresponding to the first neighboring cell of the serving cell is greater than the measurement values of other neighboring cells of the serving cell, it is determined that the GNSS position information reported by the terminal is reliable.

In the embodiments of the disclosure, the measurement value corresponding to the first neighboring cell of the serving cell is compared with the measurement values of other neighboring cells of the serving cell. In a case where the measurement value corresponding to the first neighboring cell of the serving cell is greater than the measurement values of other neighboring cells of the serving cell, it indicates that the network device of the first neighboring cell of the serving cell is closest to the terminal, and the position information reported by the terminal is not mirrored position information but reliable position information.

In the embodiments of the disclosure, the terminal obtains the ephemeris information of the neighboring cell of the serving cell. Based on the ephemeris information, the terminal determines that there is the position verification error in the GNSS position information reported by the terminal, triggers measuring of the neighboring cell of the serving cell, obtains the measurement value, and reports the measurement value to the network device. The network device receives the GNSS position information and the measurement value, and verifies, based on the measurement value, the reliability of the GNSS position information reported by the terminal. In this way, the reliability of the position information reported by the terminal may be determined based on the measurement value of the target neighboring cell of the serving cell, eliminating interference from mirrored position information caused by satellite movement, improving the accuracy of the position verification and avoiding the problem that the terminal fails to access the system due to the failure of the position verification.

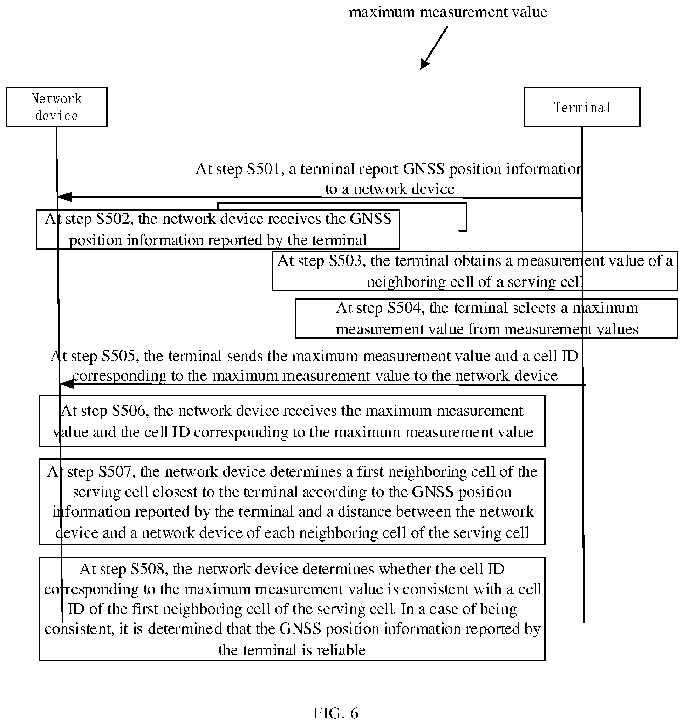

In some embodiments of the disclosure, the terminal determines a target cell with the maximum measurement value and reports an ID of this target cell to the network device. The network device then verifies, based on the cell ID corresponding to the maximum measurement value, the reliability of the GNSS position information reported by the terminal. As illustrated in FIG. 6, a terminal position verification method is provided, and the method includes the following steps.

At step S501, a terminal report GNSS position information to a network device.

In the embodiments of the disclosure, the relevant content of the terminal reporting the GNSS position information to the network device may refer to the corresponding content in Step 101 of FIG. 1, which will not be elaborated here again.

At step S502, the network device receives the GNSS position information reported by the terminal.

In the embodiments of the disclosure, the relevant content of the network device receiving the GNSS position information reported by the terminal may refer to the corresponding content in Step 201 of FIG. 2, which will not be elaborated here again.

At step S503, the terminal obtains a measurement value of a neighboring cell of a serving cell.

In the embodiments of the disclosure, the relevant content about the terminal obtaining the measurement value of the neighboring cell of the serving cell may refer to the relevant descriptions, and it will not be elaborated here again.

At step S504, the terminal selects a maximum measurement value from measurement values.

At step S505, the terminal sends the maximum measurement value and a cell ID corresponding to the maximum measurement value to the network device.

At step S506, the network device receives the maximum measurement value and the cell ID corresponding to the maximum measurement value.

At step S507, the network device determines a first neighboring cell of the serving cell closest to the terminal according to the GNSS position information reported by the terminal and a distance between the network device and a network device of each neighboring cell of the serving cell.

At step S508, the network device determines whether the cell ID corresponding to the maximum measurement value is consistent with a cell ID of the first neighboring cell of the serving cell. In a case where the cell ID corresponding to the maximum measurement value is consistent with the cell ID of the first neighboring cell of the serving cell, it is determined that the GNSS position information reported by the terminal is reliable.

In embodiments of the disclosure, the terminal obtains the measurement value of the neighboring cell of the serving cell, selects the maximum measurement value from the measurement values of all neighboring cells of the serving cell, and reports the maximum measurement value and the cell corresponding to the maximum measurement value to the network device. The network device verifies, based on the maximum measurement value and the cell corresponding to the maximum measurement value, the reliability of the GNSS position information reported by the terminal. In this way, the reliability of the position information reported by the terminal may be determined based on the measurement value of the target neighboring cell of the serving cell, eliminating interference from mirrored position information caused by satellite movement, improving the accuracy of the position verification and avoiding the problem that the terminal fails to access the system due to the failure of the position verification.

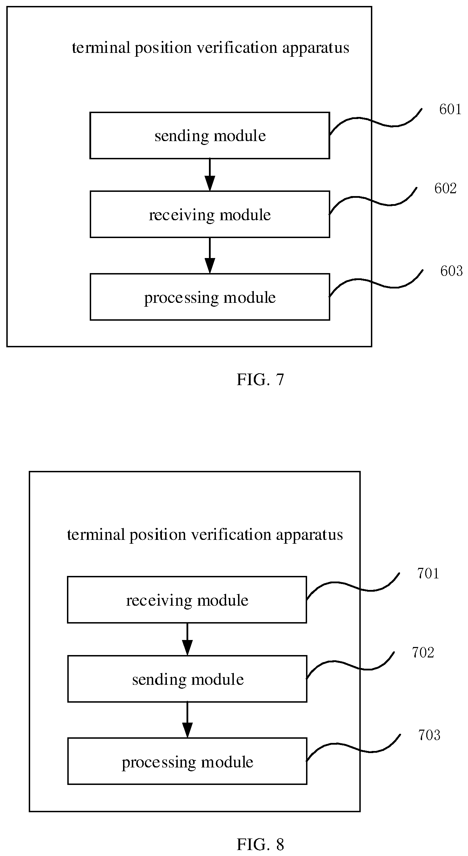

Based on the above description of the method, the embodiments of the disclosure provide a terminal position verification apparatus. As illustrated in FIG. 7, the terminal position verification apparatus is applied to a terminal and includes:
a sending module 601, configured to report GNSS position information to a network device;
a receiving module 602, configured to receive configuration information; and
a processing module 603, configured to measure, based on the configuration information, a neighboring cell of a serving cell and obtain a measurement result;
in which the sending module is further configured to send the measurement result to the network device.

In some embodiments of the disclosure, the receiving module 602 is configured to:
receive the configuration information sent by the network device, in which the configuration information comprises measurement configuration information for the neighboring cell of the serving cell.

In some embodiments of the disclosure, the processing module 603 is configured to:
measure the neighboring cell of the serving cell according to the measurement configuration information, and obtain a measurement value.

In some embodiments of the disclosure, the receiving module 602 is further configured to receive, from the network device, an instruction for measuring the neighboring cell of the serving cell, trigger the processing module 603 to measure, according to the measurement configuration information, the neighboring cell of the serving cell, and obtain the measurement value.

In some embodiments of the disclosure, the processing module 603 is further configured to measure the neighboring cell of the serving cell according to the measurement configuration information indicated by indication information, and obtain the measurement value, in which the instruction includes the indication information indicating at least two sets of measurement configuration information for the neighboring cell.

In some embodiments of the disclosure, the measurement configuration information includes at least one of:
a cell ID of a neighboring cell to be measured of the serving cell;
measurement pilot configuration information to be measured;
information on a time-domain position where performing a measurement is determined; or
a measurement value.

In some embodiments of the disclosure, the receiving module 602 is further configured to receive ephemeris information of the neighboring cell of the serving cell.

In some embodiments of the disclosure, the processing module 603 is further configured to determine, according to the ephemeris information, that there is a position verification error in the GNSS position information reported by the terminal, trigger measuring of the neighboring cell of the serving cell, and obtain a measurement value.

In some embodiments of the disclosure, the sending module 601 is further configured to send the measurement value to the network device.

In some embodiments of the disclosure, the sending module 601 is further configured to select a maximum measurement value from the measurement values, and send the maximum measurement value and a cell ID corresponding to the maximum measurement value to the network device.

In some embodiments of the disclosure, the sending module 601 is further configured to select a maximum measurement value from the measurement values, and send a cell ID corresponding to the maximum measurement value to the network device.

Based on the above description of the method, the embodiments of the disclosure provide a terminal position verification apparatus. As illustrated in FIG. 7, the terminal position verification apparatus is applied to a network device and includes:
a receiving module 701, configured to receive GNSS position information reported by a terminal and receive a measurement result sent by the terminal, in which the measurement result is obtained by the terminal measuring a neighboring cell of a serving cell;
a sending module 702, configured to send configuration information to the terminal; and
a processing module 703, configured to verify, based on the measurement result, a reliability of the GNSS position information reported by the terminal.

In some embodiments of the disclosure, the processing module 703 is configured to:
determine a first neighboring cell of the serving cell closest to the terminal according to the GNSS position information reported by the terminal and a distance between the network device and a network device of each neighboring cell of the serving cell;
compare a measurement value corresponding to the first neighboring cell of the serving cell with measurement values of other neighboring cells of the serving cell;
in a case where the measurement value corresponding to the first neighboring cell of the serving cell is greater than the measurement values of other neighboring cells of the serving cell, determine that the GNSS position information reported by the terminal is reliable.

In some embodiments of the disclosure, the sending module 702 is further configured to send the configuration information to the terminal, in which the configuration information includes measurement configuration information for the neighboring cell of the serving cell.

In some embodiments of the disclosure, the sending module 702 is further configured to send an instruction to the terminal, in which the instruction is configured to trigger the terminal to measure the neighboring cell of the serving cell.

In some embodiments of the disclosure, the instruction carries indication information indicating at least two sets of measurement configuration information for the neighboring cell of the serving cell.

In some embodiments of the disclosure, the measurement configuration information includes at least one of:
a cell ID of a neighboring cell to be measured of the serving cell;
measurement pilot configuration information to be measured;
information on a time-domain position where performing a measurement is determined; or
the measurement value.

In some embodiments of the disclosure, the measurement result comprises a cell ID corresponding to a maximum measurement value, and the processing module 703 is further configured to:
determine a first neighboring cell of the serving cell closest to the terminal according to the GNSS position information reported by the terminal and a distance between the network device and a network device of each neighboring cell of the serving cell;
determine whether the cell ID corresponding to the maximum measurement value is consistent with a cell ID of the first neighboring cell of the serving cell; and
in a case where the cell ID corresponding to the maximum measurement value is consistent with the cell ID of the first neighboring cell of the serving cell, determine that the GNSS position information reported by the terminal is reliable.

In some embodiments of the disclosure, the terminal reports the measurement value of the target cell to the network device. The network device then verifies, based on the measured value, the reliability of the GNSS position information reported by the terminal. When reporting the measurement values of all the neighboring cells of the serving cell, the terminal may be triggered by the network device to measure the neighboring cell of the serving cell and report the measurement value. The terminal may also be triggered, based on the ephemeris information of the neighboring cell of the serving cell, to measure the neighboring cell of the serving cell and report the measurement value. The embodiments of the disclosure do not impose specific limitations on this.

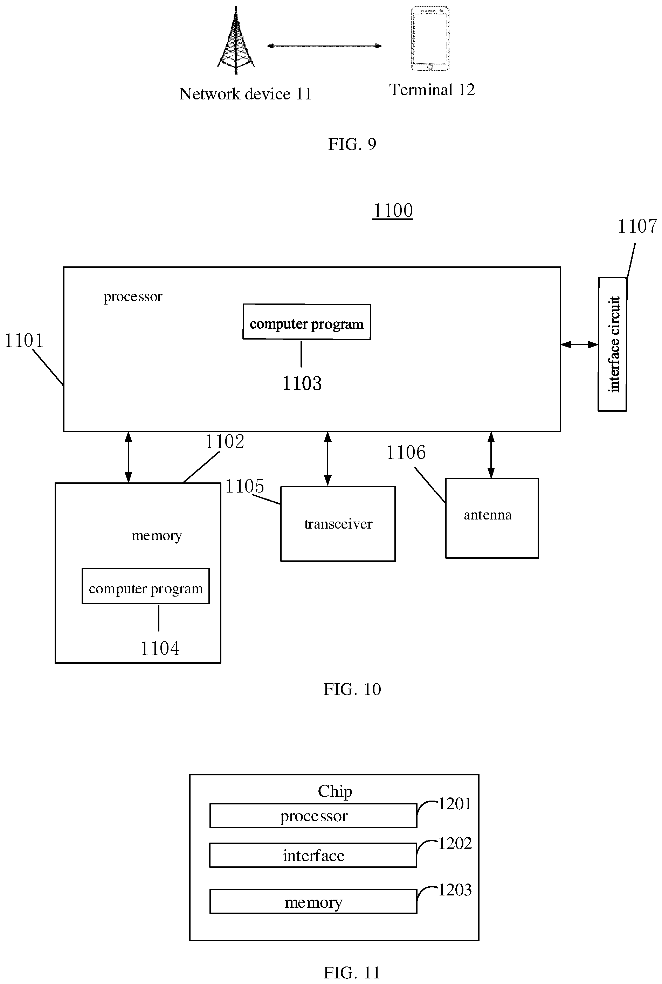

Referring to FIG. 9, FIG. 9 is a block diagram of a communication system according to an embodiment of the disclosure. The communication system may include, but is not limited to, one network device and one terminal. The number and form of the devices shown in FIG. 1 are only for illustration and do not constitute a limitation to the embodiments of the disclosure. In practical applications, it may include two or more network devices and two or more terminal.

It should be noted that the technical solutions of the embodiments of the disclosure may be applied to various communication systems. For example: a long term evolution (LTE) system, a 5th generation (5G) mobile communication system, a 5G New Radio (NR) system, or other future new mobile communication systems, etc.

The network device 11 in the embodiments of the disclosure is an entity for transmitting or receiving signals on the network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of the disclosure do not impose limitations on the specific technologies and specific device forms adopted by the network device. The network device provided in the embodiments of the disclosure can be composed of a central unit (CU) and a distributed unit (DU). The CU may also be called a control unit. With the CU-DU structure, protocol layers of the network device, such as a base station, may be split. Functions of some protocol layers are centrally controlled in the CU, and functions of the remaining part or all of the protocol layers are distributed in the DU, with the CU centrally controlling the DU.

The terminal 12 in the embodiments of the disclosure is an entity for transmitting or receiving signals on the user side, such as a mobile phone. The terminal may also be referred to as a terminal, user equipment (UE), mobile station (MS), mobile terminal (MT), etc. The terminal may be a car with communication functions, a smart car, a mobile phone, a wearable device, a Pad, a computer with wireless transceiving functions, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, and so on. The embodiments of the disclosure do not impose any limitations on the specific technologies and specific device forms adopted by the terminal.

The relevant description of the terminal in the embodiments of the disclosure refers to the relevant description in the above embodiments. The relevant description of the network device in the embodiments of the disclosure refers to the relevant description in the above embodiments, and it will not be elaborated here again.

It may be understood that the communication system described in the embodiments of the disclosure is intended to illustrate the technical solutions of the embodiments of the disclosure more clearly, and does not constitute a limitation to the technical solutions provided by the embodiments of the disclosure. Those of ordinary skill in the art know that with the evolution of the system architecture and the emergence of new service scenarios, the technical solutions provided by the embodiments of the disclosure are also applicable to similar technical problems.

Referring to FIG. 10, FIG. 10 is a schematic diagram of a communication apparatus 1100 according to an embodiment of the disclosure. The communication apparatus 1100 may be a network device, a UE, a chip, a chip system, or a processor that supports the network device to implement the above method, or a chip, a chip system, or a processor that supports the UE to implement the above method. This apparatus may be configured to implement the method described in the above method embodiments, with reference to the description of the above method embodiments.

The communication apparatus 1100 may include one or more processors 1101. The processor 1101 may be a general purpose processor or a dedicated processor, such as, a baseband processor or a central processor. The baseband processor is configured for processing communication protocols and communication data. The central processor is configured for controlling the communication apparatus (e.g., base station, baseband chip, terminal, terminal chip, central unit (CU) and distributed unit (DU)), executing computer programs, and processing data of the computer programs.

Optionally, the communication apparatus 1100 may include one or more memories 1102 on which computer programs 1104 are stored. The processor 1101 executes the computer programs 1104 to cause the communication apparatus 1100 to perform the methods described in the above method embodiments. Optionally, the memory 1102 may also store data. The communication apparatus 1100 and the memory 1102 may be set separately or integrated together.

Optionally, the communication apparatus 1100 may also include a transceiver 1105 and an antenna 1106. The transceiver 1105 may be referred to as transceiver unit, transceiver machine, or transceiver circuit, for realizing the transceiver function. The transceiver 1105 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1100 may also include one or more interface circuits 1107. The interface circuit 1107 is configured to receive code instructions and transmit the code instructions to the processor 1101. The processor 1101 runs the code instructions to cause the communication apparatus 1100 to perform the method described in the method embodiments.

In an implementation, the processor 1101 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be configured for code/data reading and writing, or may be configured for signal transmission or delivery.

In an implementation, the processor 1101 stores a computer program 1103. When the computer program 1103 runs on the processor 1101, the communication apparatus 1100 is caused to perform the method described in the above method embodiments. The computer program 1103 may be solidified in the processor 1101, in which case the processor 1101 may be implemented by hardware.

In an implementation, the communication apparatus 1100 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network device or a UE, but the scope of the communication apparatus described in the disclosure is not limited thereto, and the structure of the communication apparatus is not limited by FIG. 10. The communication apparatus may be a stand-alone device or may be part of a larger device. For example, the communication apparatus may be:
(1) a stand-alone IC, chip, chip system or subsystem;
(2) a collection of ICs including one or more ICs, optionally, the collection of ICs may also include a storage component for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

For the case where the communication apparatus may be a chip or a chip system reference may be made to the schematic diagram of a chip shown in FIG. 11. In FIG. 11, the chip includes a processor 1201 and an interface 1202. There may be one or more processors 1201, and there may be a plurality of interfaces 1202.

Optionally, the chip further includes a memory 1203 configured for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs)) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using "first", "second", and "third", and "A", "B", "C" and "D" do not indicate any order of precedence or magnitude.

As used herein, the terms "machine-readable medium" and "computer-readable medium" refer to any computer program product, device, and/or equipment (e.g., magnetic disk, optical disk, memory, programmable logic device (PLD)) for providing machine instructions and/or data to a programmable processor, which includes a machine-readable medium that receives machine instructions as machine-readable signals. The term "machine-readable signal" refers to any signal used to provide machine instructions and/or data to a programmable processor.

The systems and technologies described herein may be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of such background components, middleware components, or front-end components. The components of the system may be interconnected by any form or medium of digital data communication (e.g., a communication network). Examples of communication networks include: a Local Area Network (LAN), a Wide Area Network (WAN), and the Internet.

The computer system may include a client and a server. The client and server are generally remote from each other and interacting through a communication network. The client-server relation is generated by computer programs running on the respective computers and having a client-server relation with each other.

It is understandable that the steps may be reordered, added or deleted using various forms of processes shown above. For example, the steps in the disclosure may be performed in parallel, sequentially or in different orders, as long as the desired results of the technical solutions disclosed in the disclosure are achieved, which are not limited herein.

In addition, it should be understood that the embodiments of the disclosure may be implemented separately or in combination with other embodiments if it is allowed by the disclosure.

Those skilled in the art may realize that the units and algorithmic steps of the various examples described in combination with the embodiments of the disclosure disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the art that for convenience and conciseness of description, the specific working processes of the systems, devices and units described above can refer to the corresponding processes in the aforementioned method embodiments, and will not be repeated here.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A terminal position verification method, performed by a terminal, comprising:
reporting global navigation satellite system (GNSS) position information to a network device;
receiving configuration information;
measuring a neighboring cell of a serving cell based on the configuration information; and
sending a measurement result to the network device.

2. The method of claim 1, wherein receiving the configuration information comprises:
receiving the configuration information sent by the network device, wherein the configuration information comprises measurement configuration information for the neighboring cell of the serving cell.

3. The method of claim 1, wherein measuring the neighboring cell of the serving cell based on the configuration information comprises:
measuring the neighboring cell of the serving cell according to the measurement configuration information, and
obtaining a measurement value.

4. The method of claim 2, wherein measuring the neighboring cell of the serving cell according to the measurement configuration information, and obtaining the measurement value comprises:
receiving, from the network device, an instruction for measuring the neighboring cell of the serving cell,
triggering measuring, according to the measurement configuration information, of the neighboring cell of the serving cell, and
obtaining the measurement value.

5. The method of claim 4, wherein measuring the neighboring cell of the serving cell according to the measurement configuration information, and obtaining the measurement value comprises:
measuring the neighboring cell of the serving cell according to the measurement configuration information indicated by indication information, and obtaining the measurement value, wherein the instruction comprises the indication information indicating at least two sets of measurement configuration information for the neighboring cell.

6. The method of claim 5, wherein the measurement configuration information comprises at least one of:
a cell identity (ID) of a neighboring cell to be measured of the serving cell;
measurement pilot configuration information to be measured;
information on a time-domain position where performing a measurement is determined; or
a measurement value.

7. The method of claim 1, wherein receiving the configuration information comprises:
receiving ephemeris information of the neighboring cell of the serving cell.

8. The method of claim 7, wherein measuring the neighboring cell of the serving cell based on the configuration information comprises:
determining, according to the ephemeris information, that there is a position verification error in the GNSS position information reported by the terminal, triggering measuring of the neighboring cell of the serving cell, and obtaining a measurement value.

9. The method of any one of claims 3-8, wherein sending the measurement result to the network device comprises:
sending the measurement value to the network device.

10. The method of any one of claims 3-8, wherein sending the measurement result to the network device comprises:
selecting a maximum measurement value from measurement values; and
wherein sending the measurement result to the network device further comprises:
sending the maximum measurement value and a cell ID corresponding to the maximum measurement value to the network device; or
sending a cell ID corresponding to the maximum measurement value to the network device.

11. A terminal position verification method, performed by a network device, comprising:
receiving global navigation satellite system (GNSS) position information reported by a terminal;
sending configuration information to the terminal;
receiving a measurement result sent by the terminal, wherein the measurement result is obtained by the terminal measuring a neighboring cell of a serving cell; and
verifying, based on the measurement result, a reliability of the GNSS position information reported by the terminal.

12. The method of claim 11, wherein in a case where the measurement result is a measurement value, verifying, based on the measurement result, the reliability of the GNSS position information reported by the terminal comprises:
determining a first neighboring cell of the serving cell closest to the terminal according to the GNSS position information reported by the terminal and a distance between the network device and a network device of each neighboring cell of the serving cell;
comparing a measurement value corresponding to the first neighboring cell of the serving cell with measurement values of other neighboring cells of the serving cell;
in a case where the measurement value corresponding to the first neighboring cell of the serving cell is greater than the measurement values of other neighboring cells of the serving cell, determining that the GNSS position information reported by the terminal is reliable.

13. The method of claim 12, further comprising:
sending the configuration information to the terminal, wherein the configuration information comprises measurement configuration information for the neighboring cell of the serving cell.

14. The method of claim 13, further comprising:
sending an instruction to the terminal, wherein the instruction is configured to trigger the terminal to measure the neighboring cell of the serving cell.

15. The method of claim 14, wherein the instruction carries indication information indicating at least two sets of measurement configuration information for the neighboring cell of the serving cell.

16. The method of any one of claims 13-15, wherein the measurement configuration information comprises at least one of:
a cell identity (ID) of a neighboring cell to be measured of the serving cell;
measurement pilot configuration information to be measured;
information on a time-domain position where performing a measurement is determined; or
the measurement value.

17. The method of claim 11, wherein the measurement result comprises a cell ID corresponding to a maximum measurement value, and verifying, based on the measurement result, the reliability of the GNSS position information reported by the terminal comprises:
determining a first neighboring cell of the serving cell closest to the terminal according to the GNSS position information reported by the terminal and a distance between the network device and a network device of each neighboring cell of the serving cell;
determining whether the cell ID corresponding to the maximum measurement value is consistent with a cell ID of the first neighboring cell of the serving cell; and
in a case where the cell ID corresponding to the maximum measurement value is consistent with the cell ID of the first neighboring cell of the serving cell, determining that the GNSS position information reported by the terminal is reliable.

18. A terminal position verification apparatus, configured in a terminal, comprising:
a sending module, configured to report global navigation satellite system (GNSS) position information to a network device;
a receiving module, configured to receive configuration information; and
a processing module, configured to measure, based on the configuration information, a neighboring cell of a serving cell and obtain a measurement result;
wherein the sending module is further configured to send the measurement result to the network device.

19. A terminal position verification apparatus, configured in a network device, comprising:
a receiving module, configured to receive global navigation satellite system (GNSS) position information reported by a terminal and receive a measurement result sent by the terminal, wherein the measurement result is obtained by the terminal measuring a neighboring cell of a serving cell;
a sending module, configured to send configuration information to the terminal; and
a processing module, configured to verify, based on the measurement result, a reliability of the GNSS position information reported by the terminal.

20. A communication device, comprising a transceiver, a memory and a processor which is connected to the transceiver and the memory respectively, wherein the processor is configured to, by executing computer-executable instructions stored in the memory, control wireless signal transmission and reception of the transceiver, and enable the method of any one of claims 1 to 10 or the method of any one of claims 11 to 17 to be implemented.

21. A computer readable storage medium for storing instructions, wherein when the instructions are executed by a processor, the method of any one of claims 1 to 10 or the method of any one of claims 11 to 17 is implemented.

22. A communication system comprising a terminal configured to implement the method of any one of claims 1 to 10 or a network device configured to implement the method of any one of claims 11 to 17.
